# EUROPÄISCHE PATENTSCHRIFT

(11) **EP 2 764 607 B1**
(45) Veröffentlichungstag und Bekanntmachung des Hinweises auf die Patenterteilung: **11.05.2016**
(21) Anmeldenummer: 12745624.2
(22) Anmeldetag: 26.07.2012
(51) Int. Cl.: H02K 3/50

(54) **ANSCHLUSSEINHEIT FÜR DIE VERSCHALTUNG DER STATORWICKLUNGEN EINES ELEKTROMOTORS UND ELEKTROMOTOR**
CONNECTING UNIT FOR WIRING THE STATOR WINDINGS OF AN ELECTRIC MOTOR, AND ELECTRIC MOTOR
UNITÉ DE CONNEXION CONÇUE POUR LE RACCORDEMENT DES ENROULEMENTS STATORIQUES D'UN MOTEUR ÉLECTRIQUE ET MOTEUR ÉLECTRIQUE

(30) Priorität: 07.10.2011 DE 102011115110
(43) Veröffentlichungstag der Anmeldung: 13.08.2014
(73) Patentinhaber: Sew-Eurodrive GmbH & Co. KG, 76646 Bruchsal (DE)
(72) Erfinder: WINNWA, Manuel, 66978 Clausen (DE); MEGERLE, Thomas, 76646 Bruchsal (DE)
(86) Internationale Anmeldenummer: PCT/EP2012/003164
(87) Internationale Veröffentlichungsnummer: WO 2013/050093

(56) Entgegenhaltungen:
- WO-A1-2006/018396
- DE-A1- 1 934 897
- DE-A1- 10 239 935
- DE-A1-102004 027 653
- DE-A1-102007 027 459
- DE-B- 1 282 157
- DE-U1- 7 900 143
- JP-A- S6 096 147

## Beschreibung

Die Erfindung betrifft eine Anschlusseinheit für die Verschaltung der Statorwicklungen eines Elektromotors und einen Elektromotor.

Es ist allgemein bekannt, dass Statorwicklungsleitungen mit ihren Endbereichen herausgeführt werden in einen Anschlusskasten des zugehörigen Elektromotors, wo sie verbunden werden mit elektrischen Versorgungsleitungen und/oder die elektrische Verschaltung, also Verschaltung der Statorwicklungen in Sternschaltung oder Dreieckschaltung, ausgeführt wird.

Aus der DE 102 39 935 A1 ist ein Verfahren zur Herstellung der Verbindungen zwischen den Enden der Wicklungen des Stators einer elektrischen Maschine und externen Leitern und zwischen dem Statorblechpaket und einem Maschinengehäuse und eine elektrische Maschine mit nach dem Verfahren hergestellten Verbindungen bekannt, wobei Anschlussklötzchen mit Gewindebohrung verwendet werden.

Aus der WO 2006/018396 A1 ist einen Anschlussvorrichtung für eine elektrische Maschine bekannt.

Aus der DE 10 2004 027 653 A1 ist eine Elektromotor bekannt, bei dem ein Stanz-Biege-Gitter zur Verschaltung der Statorwicklungen vorgesehen ist.

Aus der DE 79 00 143 U1 ist eine Klemmplatte für explosionsgeschützte Motoren bekannt.

Aus der DE 10 2007 027 459 A1 ist ein Klemmenbrett bekannt.

Aus der DE 1 934 897 A1 ist ein Ständer einer elektrischen Maschine bekannt.

Aus der DE 1 282 157 ist ein Verfahren zur Herstellung eines durch eine Gussmasse allseitig geschlossenen elektrischen Kleinmotors bekannt.

Aus der JP S 6096147 ist eine automatisiert herstellbare Elektromaschine bekannt.

Der Erfindung liegt daher die Aufgabe zugrunde, einen Elektromotor kompakt weiterzubilden.

Erfindungsgemäß wird die Aufgabe bei dem Elektromotor nach den in Anspruch 1 angegebenen Merkmalen gelöst.

Wichtige Merkmale der Erfindung bei der Anschlusseinheit für die Verschaltung der Statorwicklungen eines Elektromotors sind, dass, die Enden der Statorwicklungsleitungen mit Kabelschuhen verbunden sind, insbesondere kraftschlüssig verbunden und/oder schweißverbunden sind,
wobei die Kabelschuhe mit jeweiligen Bolzen verbunden sind, insbesondere wobei die Bolzen durch eine im Kabelschuh angeordnete Ausnehmung gesteckt sind,
wobei die Bolzen jeweils mit einem Abstandshalter verbunden, insbesondere schraubverbunden sind,
wobei der Abstand zwischen nächstbenachbarten Bolzen, insbesondere entlang dem Abstandshalter und/oder also der Abstand zwischen den Verbindungsbereichen des jeweiligen Bolzens mit dem Abstandshalter, jeweils größer ist als die radiale Ausdehnung des Abstandshalters,
insbesondere so dass die Bolzen am Abstandshalter in einer Reihe angeordnet und jeweils voneinander beabstandet sind.

Von Vorteil ist dabei, dass die elektrischen Anschlüsse nicht aus dem Stator herausgeführt werden sondern innerhalb der Vergussmasse des Stators die Statorwicklungen mit den Bolzen, also Anschlussmitteln, verbunden werden. Außerdem ist auch die Verschaltung innerhalb der Vergussmasse ausgeführt und somit gut geschützt, insbesondere mechanisch stabilisiert und elektrisch gut isoliert sowie mit effektiv entwärmt bei Verwendung von Vergussmasse mit guter Wärmeleitfähigkeit. Die Verschaltung und das Verbinden mit Anschlussmitteln erfordert also keinen zusätzlichen Bauraum.

Bei einer vorteilhaften Ausgestaltung ist der Abstandshalter im Wesentlichen linienhaft und/oder langgestreckt ausgeführt. Von Vorteil ist dabei, dass die Verschaltung mit Anschlusseinheit in der Statorvergussmasse im axialen Bereich der Wickelköpfe, also Umlenkbereiche der Statorwicklungen, anordenbar ist und somit Bauraum optimal ausnutzbar ist. Denn im Bereich der Wickelköpfe ist zwischen den Wickelköpfen und dem Rotor genügend Bauraum vorhanden. Insbesondere ist der Rotor zwar mit Aktivteilen oder Reaktivteilen bestückbar, wie beispielsweise Kurzschlusskäfig oder Dauermagnete, jedoch sind diese nur im axialen Bereich des Statorblechpakets notwendig. Im sich daran anschließenden Bereich der Wickelköpfe ist somit an deren radialen Innenseite zum Rotor hin noch genügend Bauraum, da der Rotor hier mit einem kleineren Durchmesser ausführbar ist als im Bereich des Statorblechpakets, insbesondere wo dort nur ein geringer Luftspalt zwischen Rotor und Stator hergestellt werden muss.

Bei einer vorteilhaften Ausgestaltung ist der Abstandshalter einstückig und/oder aus elektrisch isolierendem Material ausgeführt, insbesondere aus Kunststoff, aus einem Epoxidharz aufweisenden Teil oder aus Keramik. Von Vorteil ist dabei, dass die Bolzen von einem elektrisch isolierenden Teil gehalten sind.

Bei einer vorteilhaften Ausgestaltung sind die Kabelschuhe jeweils mittels einer ihrer ausgestanzten Ausnehmungen auf die Bolzen aufgesteckt. Von Vorteil ist dabei, dass eine in radialer Richtung formschlüssige und somit sichere Verbindung hergestellt ist.

Bei einer vorteilhaften Ausgestaltung sind an einem oder mehreren Bolzen mehrere, parallel ausgerichtete Kabelschuhe verbunden,
insbesondere wobei zwischen den Kabelschuhen eine Distanzhülse, insbesondere eine metallisch ausgeführte Distanzhülse, am Bolzen angeordnet ist,
insbesondere wobei an dem oder an den Bolzen die mit ersten Enden der Statorwicklungen verbundenen Kabelschuhe verbunden sind. Von Vorteil ist dabei, dass eine besonders kompakte Ausführung ermöglicht ist.

Bei einer vorteilhaften Ausgestaltung sind an einem zur Bildung eines Sternpunktes vorgesehenen Bolzen mehrere, nicht parallel ausgerichtete Kabelschuhe verbunden,
insbesondere wobei an dem Bolzen die mit zweiten Enden der Statorwicklungen verbundenen Kabelschuhe verbunden sind. Von Vorteil ist dabei, dass keine Distanzhülsen am Bolzen zwischen den Kabelschuhen notwendig sind.

Bei einer vorteilhaften Ausgestaltung ist der zur Bildung eines Sternpunktes vorgesehene Bolzen axial, insbesondere in Bolzenachsrichtung und/oder in Rotorachsrichtung des Elektromotors, weniger ausgedehnt als die anderen Bolzen. Von Vorteil ist dabei, dass der Sternpunkt vollständig in der Vergussmasse vorsehbar ist und somit elektrisch von der Umgebung isoliert angeordnet ist.

Bei einer vorteilhaften Ausgestaltung sind die Kabelschuhe mit dem Abstandshalter und/oder mit der Distanzhülse mittels auf Gewindebereiche der Bolzen aufgeschraubten Muttern befestigt. Von Vorteil ist dabei, dass einfache kostengünstige Mittel zur Bildung der Anschlusseinheit verwendbar sind.

Bei einer vorteilhaften Ausgestaltung sind die an einem jeweiligen Bolzen befestigten, parallel ausgerichteten Kabelschuhe und die in sie hineinführenden Enden der Statorwicklungsleitungen tangential zur Umfangsrichtung gerichtet. Von Vorteil ist dabei, dass der Motor wiederum platzsparend ausführbar ist.

Bei einer vorteilhaften Ausgestaltung sind die Kabelschuhe, die Bolzen und die Distanzhülse aus elektrisch leitfähigem Material, insbesondere aus metallischem Material, gefertigt. Von Vorteil ist dabei, dass einfach herstellbare Blechteile, insbesondere Stanz-Biegeteile, verwendbar sind.

Wichtige Merkmale bei dem Elektromotor mit einer vorgenannten Anschlusseinheit sind, dass
die Anschlusseinheit derart in Vergussmasse angeordnet ist, dass der zur Bildung eines Sternpunktes vorgesehene Bolzen nicht aus der Vergussmasse herausragt und dass die anderen Bolzen zumindest teilweise herausragen aus der Vergussmasse,
insbesondere wobei alle Kabelschuhe in Vergussmasse vergossen sind.

Von Vorteil ist dabei, dass eine mechanisch stabile und elektrisch isolierte Ausführung ermöglicht ist.

Bei einer vorteilhaften Ausgestaltung sind elektrische Leitungen zur Versorgung des Elektromotors mit den aus der Vergussmasse herausragenden Endbereichen der Bolzen elektrisch verbunden,
insbesondere wobei die Leitungen mit Kabelschuhen versehen sind, die mittels Muttern auf die Bolzen befestigt sind: Von Vorteil ist dabei, dass Versorgungsleitungen einfach verbindbar sind, insbesondere mittels mit den Leitungen verbundener und aufgesteckt sowie angeschraubter Kabelschuhe.

Weitere Vorteile ergeben sich aus den Unteransprüchen.

Die Erfindung wird nun anhand von Abbildungen näher erläutert:
In der Figur 1 ist eine erfindungsgemäße Anschlusseinheit in Schrägansicht gezeigt.

In der Figur 2 ist ein Stator eines Elektromotors in Schrägansicht gezeigt, wobei die erfindungsgemäße Anschlusseinheit vergossen integriert ist.

In der Figur 3 ist der Stator aus Figur 2 angeschnitten gezeigt.

In der Figur 4 ist Querschnitt durch den Stator gezeigt.

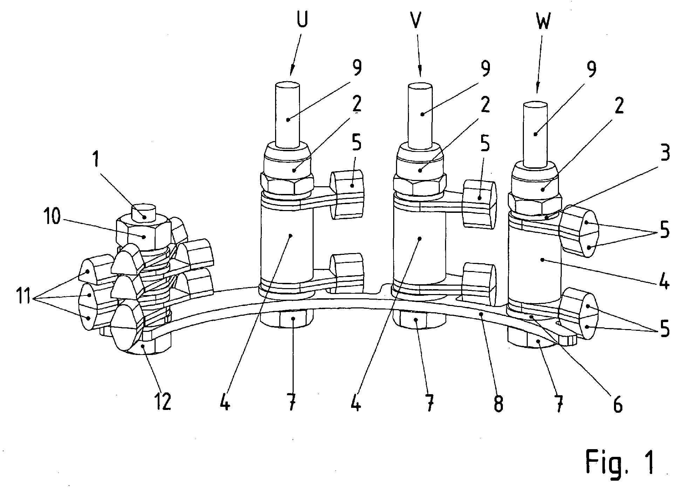

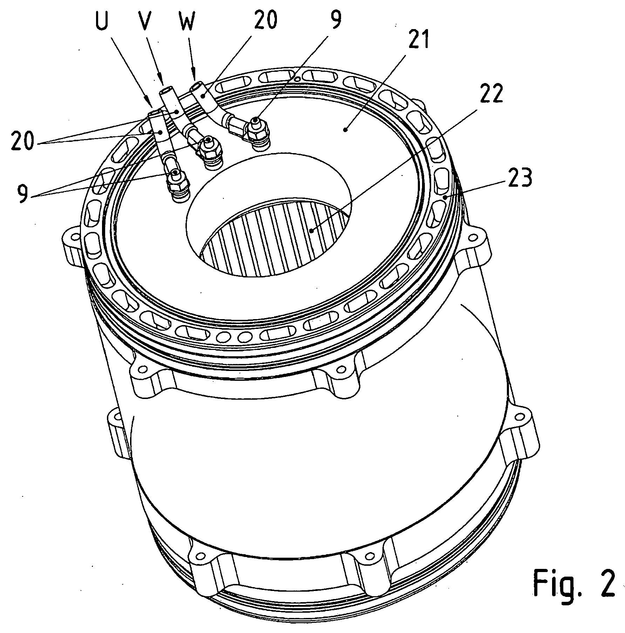

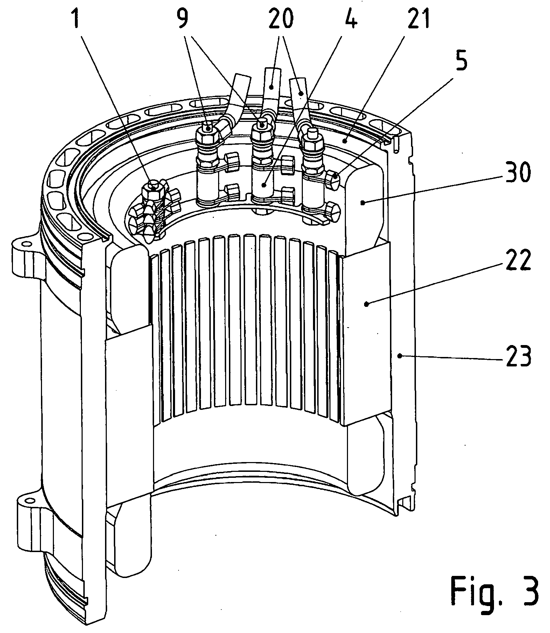

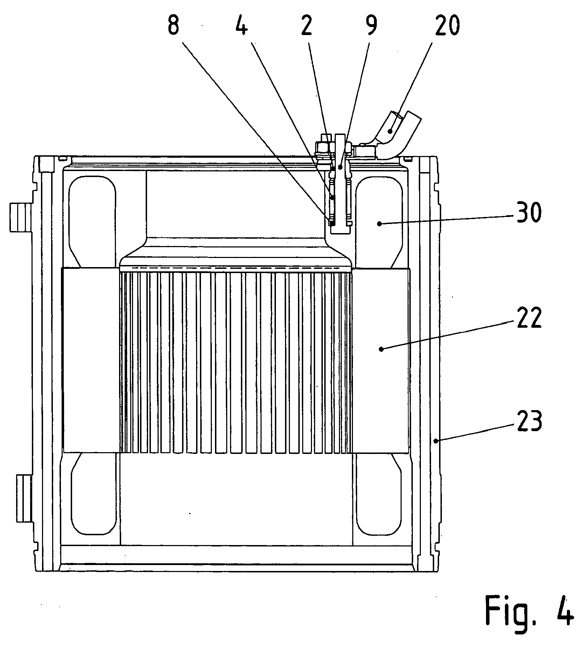

Wie in den Figuren 1 bis 4 gezeigt, weist der erfindungsgemäße Elektromotor eine Anschlusseinheit auf, welche einen langgestreckten Abstandshalter 8 aufweist, an dem vier Bolzen hintereinander angeordnet sind. Der Abstandshalter nimmt also eine Reihe von Bolzen auf und nimmt daher eine quasi eindimensionale Anordnung von Bolzen (1, 9) auf.

Der Elektromotor weist eine Drehstromwicklung mit Statorwicklungen (U, V, W) auf, deren jeweilige Enden an Kabelschuhe (5, 11) geführt und elektrisch mit diesen verbunden sind, insbesondere schweißverbunden oder lötverbunden.

Ein erster Bolzen 1 ist zur Bildung eines Sternpunktes vorgesehen. Hierzu werden die ersten Enden der Statorwicklungen (U, V, W) an die Kabelschuhe 11 verbunden und die jeweils zweiten Enden der Statorwicklungen an die Kabelschuhe 5, welche an von den anderen Bolzen (1, 9) mittels des Abstandshalters 8 beabstandeten Bolzen 9 befestigt sind. Hierbei sind die Kabelschuhe (11, 5) als Ringkabelschuhe ausgeführt und auf den jeweiligen Bolzen (1, 9) aufgesteckt und/oder aufgefädelt.

Zur Aufnahme des jeweiligen Bolzens (1, 9) weist der Abstandshalter 8 eine jeweilige Ausnehmung, insbesondere ein Loch auf, so dass der Bolzen (1, 9) hindurchgeführt ist. Von der Unterseite her ist auf einen Gewindebereich des jeweiligen Bolzens (1, 9) eine Mutter (7, 12) aufgeschraubt.

An der Oberseite ist zwischen dem auf den Bolzen (1, 9) aufgesteckten Kabelschuh 5 und dem Abstandshalter 8 jeweils eine Unterlegscheibe 6 angeordnet, die ebenfalls auf den Bolzen aufgesteckt ist.

Auf jedem Bolzen 9 ist auch ein weiterer Kabelschuh 5 aufgesteckt, der mittels einer jeweiligen Distanzhülse 4 beabstandet ist.

Kabelschuhe, Distanzhülse, Bolzen, Muttern und Unterlegscheiben sind vorzugsweise aus Metall ausgeführt.

Der Abstandshalter 8 ist aus einem elektrisch isolierenden Stoff ausgeführt, wie Kunststoff. Es ist aber auch Keramik verwendbar.

An der Oberseite jedes Bolzens ist ebenfalls ein Gewindebereich vorgesehen, auf den eine jeweilige Mutter (2, 10) aufgeschraubt ist, so dass zwischen dieser Mutter (2, 10) und der an der Unterseite eingeschraubten Mutter (7, 12) die Distanzhülse 4, die Unterlegscheiben und die Kabelschuhringbereiche mit dem Abstandshalter 8 aneinander gedrückt werden in Bolzenachsrichtung. Quer zur Bolzenachsrichtung werden die genannten Teile formschlüssig gehalten, indem sie durch ihren Lochbereich der Bolzen hindurchgeführt ist.

Da der Sternpunkt nicht herausgeführt wird aus dem Stator-Bereich, ist der Bolzen 1 samt der mit ihm verbundenen Kabelschuhe 11 in Vergussmasse vergossen angeordnet.

Ebenso sind die Kabelschuhe 5 der Bolzen 9 in der Vergussmasse 21 vergossen angeordnet, wobei jedoch die oberen Endbereiche der Bolzen 9 aus der Vergussmasse 21 herausragen.

Mittels der Vergussmasse 21 sind die Kabelschuhe (11,5) an den Bolzen (1, 9) gegen mechanische Schwingungen stabil gehalten. Die Vergussmasse 21 stabilisiert also und verbessert außerdem die elektrische Isolation. Insbesondere der Sternpunkt ist vollständig vergossen, schaut also nicht aus der Vergussmasse 21 heraus.

An den aus der Vergussmasse 21 herausragenden Endbereichen der Bolzen 9 werden Ableitungen, also elektrische Leitungen, verbunden, die aus dem Stator-Bereich herausführen und somit die elektrische Versorgung der Statorwicklungen bewirkbar machen.

Die Statorwicklungen sind um Zähne des Statorblechpakets 22 herum vorgesehen, wobei in den axialen Endbereiche der Statorwicklung Umlenkbereiche angeordnet sind, also Wickelköpfe 30.

Auch die Wickelköpfe 30 sind von der Vergussmasse 21 zumindest teilweise umgeben und somit mechanisch stabilisiert und elektrisch isoliert.

Das die Statorwicklung samt Statorblechpaket aufnehmende Gehäuseteil 23 weist Ausnehmungen auf, durch welche ein Kühlmedium förderbar ist, so dass die Entwärmung verbessert ist. Als Vergussmasse 21 ist wärmeleitendes Material wählbar, so dass die Wärme der Wickelköpfe 30 direkt an die Innenseite des Gehäuseteils 23 abführbar ist und vom Gehäuseteil an das Kühlmedium.

Die elektrischen Leitungen 20 für die Phasen (U, V, W) der Drehstromwicklung des Elektromotors weisen an ihren Endbereichen Kabelschuhe auf, die auf die Bolzen 9 aufgesteckt und wiederum mittels Muttern angeschraubt sind.

Damit die Endbereiche der Bolzen 9 aus der Vergussmasse herausragen und der entsprechende axiale Endbereich des Bolzens 1 von der Vergussmasse umgeben ist, weist letzterer einen größeren Abstand vom Abstandshalter 8 auf als ersterer. Abstandshalter 8 erstreckt sich im Wesentlichen parallel zur Oberfläche, also Stirnfläche, der Vergussmasse 21. Hierzu ist bei der Fertigung des Motors die Motorachsrichtung in Gravitationsrichtung ausgerichtet, so dass die Vergussmasse von oben in den Bereich der Wickelköpfe und der Anschlusseinheit in den vom Gehäuseteil 23 umgebenen Bereich. Die sich bildende Oberfläche der Vergussmasse bedeckt den Bolzen 1 des Sternpunkts ganz und die weiteren Bolzen 9 teilweise, wobei die Kabelschuhe vergossen werden. Nur die Anschlussbereiche, also ein jeweiliger Endbereich des jeweiligen Bolzens 9 schaut noch aus der Vergussmasse heraus und weist dort auch einen Gewindeabschnitt auf.

Die Anschlusseinheit überdeckt in axialer Richtung einen Teilbereich des von den Wickelköpfen 30 überdeckten axialen Bereichs.

Der Stator weist mehrere, insbesondere vier, parallel geschaltete Spulen auf, so dass an jeden Bolzen 9, jeweils vier Statorwicklungsleitungen zu verbinden sind.

Wie in Figur 1 deutlich gezeigt, sind an jedem Bolzen 9 zwei Paare von Kabelschuhen 5 angeordnet, wobei ein Paar durch zwei zueinander um 180° verdreht angeordnete Kabelschuhe 5 gebildet ist. Die Ringbereiche der beiden Kabelschuhe 5 berühren hierbei einander.

Die Kabelschuhe 5 an jedem Bolzen sind parallel ausgerichtet, da somit ein möglichst kompakter Motor herstellbar ist. Denn die Statorwicklungsleitungen werden aus einem flachen Winkel ungefähr tangential in die Kabelschuhe 5 eingeführt. Dies ist allerdings nur durch die Distanzhülse 4 ermöglicht. Denn die Paare müssen in axialer Richtung genügend weit beabstandet sein, um die an einem jeweiligen Bolzen 9 einzuführenden Statorleitungen parallel heranzuführen. Ohne Distanzhülsen 4 müssten die Kabelschuhe 5 am Bolzen 9 um einen Winkelbetrag zueinander verdreht angeordnet werden, was aber in radialer Richtung einen vergrößerten Bauraum beanspruchen würde und somit nur einen kleineren Rotordurchmesser des Elektromotors ermöglichen würde. Mit der Distanzhülse 4 ist also ein paralleles Einführen der Statorleitungen ermöglicht und somit ein größerer Rotordurchmesser.

Der radiale Innenrand des Abstandhalters 8 ist kreisförmig ausgeführt. Die radiale Ausdehnung ist in denjenigen Bereichen erhöht, in welchen die Bolzen 9 verbunden sind, da dort ein ausreichend großes Loch zur Einführung der Bolzen vorgesehen ist und die zugehörige Ringwandstärke ausreichend gewählt ist.

Am Bolzen 1 sind die zwölf weiteren Endbereiche der Statorwicklungsdrähte verbunden.

Die Muttern 2 sind nur teilweise vergossen von der Vergussmasse. Die Muttern 2 sind als offene Hutmuttern ausgeführt. Dies bedeutet, dass sie einen axialen Teilbereich aufweisen, der als Außensechskantbereich ausgeführt ist. Daran schließt sich axial ein Hutbereich an. Dieser ist hier beispielhaft aus einem zylindrischen und nachfolgend abgeschrägten, insbesondere kegelstumpfförmig, ausgeführtem Bereich zusammengesetzt. Dieser abgeschrägte Bereich hat den Vorteil, dass er mit einer O-Ringdichtung versehbar ist, zu einer Formschale anbringbar ist. Auf diese Weise ist bei der Fertigung also eine Form dicht verbindbar mit den Muttern 2, so dass die Vergussmasse eingießbar ist in den Wickelkopfbereich und die Stirnseite der Muttern 2 aus der Vergussmasse heraussteht. Auf die Stirnseite werden danach die Kabelschuhe der elektrischen Versorgungsleitungen aufgelegt und mittels weiterer Muttern gegen die Stirnfläche der Muttern 2 gedrückt.

Die Distanzhülse 4 bewirkt also einerseits eine Beabstandung der an einem jeweiligen Bolzen fest gelegten beiden Paare von Kabelschuhen 5 und andererseits wird dadurch die Mutter 2, insbesondere deren Stirnfläche, auf einem größeren Abstand zum Abstandshalter 8 gebracht als das axial weit entfernteste Ende des Bolzens zur Sternpunktbildung. Somit schauen zwar die oberen Stirnflächen der Muttern 2 aus der Vergussmasse heraus, der Sternpunkt ist aber vergossen. Hierbei erstreckt sich im Übrigen der Abstandshalter beziehungsweise liegt die Ebene, welche die Verbindungsbereiche zwischen Abstandshalter und Bolzen enthält, parallel zur sichtbaren Oberfläche der Vergussmasse, also axialen Stirnfläche der Vergussmasse.

### Bezugszeichenliste

1 metallischer Bolzen für Sternpunkt
2 Mutter
3 Unterlegscheibe
4 Distanzhülse
5 Kabelschuhe für Statorwicklungsenden
6 Unterlegscheibe
7 Schraube
8 Abstandshalter
9 Bolzen
10 Mutter
11 Kabelschuhe für Sternpunkt, insbesondere für nicht herausgeführten Sternpunkt
12 Mutter
20 elektrische Leitung
21 Vergussmasse
22 Statorblechpaket
23 Gehäuseteil
30 Wickelkopf

## Patentansprüche

1. Elektromotor mit einer Anschlusseinheit für die Verschaltung der Statorwicklungen (u, v, w) des Elektromotors,
wobei die Enden der Statorwicklungsleitungen mit Kabelschuhen (5, 11)verbunden sind, insbesondere kraftschlüssig verbunden und/oder schweißverbunden sind,
wobei die Kabelschuhe (5, 11) mit jeweiligen Bolzen (1, 9) verbunden sind, insbesondere wobei die Bolzen durch eine im Kabelschuh angeordnete Ausnehmung gesteckt sind,
wobei die Kabelschuhe in Vergussmasse (21) vergossen angeordnet sind,
wobei die Bolzen jeweils mit einem Abstandshalter (8) verbunden, insbesondere schraubverbunden sind,
wobei der Abstand zwischen nächstbenachbarten Bolzen, insbesondere entlang dem Abstandshalter und/oder also der Abstand zwischen den Verbindungsbereichen des jeweiligen Bolzens mit dem Abstandshalter, jeweils größer ist als die radiale Ausdehnung des Abstandshalters,
insbesondere so dass die Bolzen am Abstandshalter in einer Reihe angeordnet und jeweils voneinander beabstandet sind,
wobei der Abstandshalter (8) einstückig und/oder aus elektrisch isolierendem Material ausgeführt ist, insbesondere aus Kunststoff, aus einem Epoxidharz aufweisenden Teil oder aus Keramik,
wobei die Kabelschuhe jeweils mittels einer ihrer ausgestanzten Ausnehmungen auf die Bolzen aufgesteckt sind,
wobei an einem zur Bildung eines Sternpunktes vorgesehenen Bolzen (1) mehrere, nicht parallel ausgerichtete Kabelschuhe (11) verbunden sind,
insbesondere wobei an dem Bolzen die mit zweiten Enden der Statorwicklungen verbundenen Kabelschuhe verbunden sind,
wobei die Anschlusseinheit derart in Vergussmasse (21) angeordnet ist, dass der zur Bildung eines Sternpunktes vorgesehene Bolzen (1) nicht aus der Vergussmasse (21) herausragt und dass die anderen Bolzen (9) zumindest teilweise herausragen aus der herausragt und dass die anderen Bolzen zumindest teilweise herausragen aus der Vergussmasse.

2. Elektromotor nach Anspruch 1,
**dadurch gekennzeichnet, dass**
der Abstandshalter im Wesentlichen linienhaft und/oder langgestreckt ausgeführt ist,

3. Elektromotor nach mindestens einem der vorangegangenen Ansprüche,
**dadurch gekennzeichnet, dass**
an einem oder mehreren Bolzen mehrere, parallel ausgerichtete Kabelschuhe verbunden sind,
insbesondere wobei zwischen den Kabelschuhen eine Distanzhülse, insbesondere eine metallisch ausgeführte Distanzhülse, am Bolzen angeordnet ist,
insbesondere wobei an dem oder an den Bolzen die mit ersten Enden der Statorwicklungen verbundenen Kabelschuhe verbunden sind.

4. Elektromotor nach mindestens einem der vorangegangenen Ansprüche,
**dadurch gekennzeichnet, dass**
der zur Bildung eines Sternpunktes vorgesehene Bolzen axial, insbesondere in Bolzenachsrichtung und/oder in Rotorachsrichtung des Elektromotors, weniger ausgedehnt ist als die anderen Bolzen.

5. Elektromotor nach mindestens einem der vorangegangenen Ansprüche,
**dadurch gekennzeichnet, dass**
die Kabelschuhe mit dem Abstandshalter und/oder mit der Distanzhülse mittels auf Gewindebereiche der Bolzen aufgeschraubten Muttern befestigt sind.

6. Elektromotor nach mindestens einem der vorangegangenen Ansprüche,
**dadurch gekennzeichnet, dass**
die an einem jeweiligen Bolzen befestigten, parallel ausgerichteten Kabelschuhe und die in sie hineinführenden Enden der Statorwicklungsleitungen tangential zur Umfangsrichtung gerichtet sind.

7. Elektromotor nach mindestens einem der vorangegangenen Ansprüche,
**dadurch gekennzeichnet, dass**
die Kabelschuhe, die Bolzen und die Distanzhülse aus elektrisch leitfähigem Material, insbesondere aus metallischem Material, gefertigt sind.

8. Elektromotor nach mindestens einem der vorangegangenen Ansprüche,
**dadurch gekennzeichnet, dass**
elektrische Leitungen zur Versorgung des Elektromotors mit den aus der Vergussmasse herausragenden Endbereichen der Bolzen elektrisch verbunden sind,
insbesondere wobei die Leitungen mit Kabelschuhen versehen sind, die mittels Muttern auf die Bolzen befestigt sind.

9. Elektromotor nach mindestens einem der vorangegangenen Ansprüche,
**dadurch gekennzeichnet, dass**
die Anschlusseinheit im axialen Beriech eines Wickelkopfes, insbesondere also Umlenkbereichs, einer Statorwicklung angeordnet ist,
insbesondere zwischen Rotor und Wickelkopf innerhalb der Vergussmasse, welche auch die Statorwicklungen umgibt.

10. Elektromotor nach mindestens einem der vorangegangenen Ansprüche,
**dadurch gekennzeichnet, dass**
die Muttern einen abgeschrägten Bereich aufweisen zum Anlegen einer Abdichtung beim Formgießen von Vergussmasse,
insbesondere wobei der abgeschrägte Bereich nicht vergossen wird mit Vergussmasse, insbesondere wobei die Muttern als offene Hutmuttern ausgeführt sind.

## Claims

1. Electric motor having a connecting unit for wiring the stator windings (U, V, W) of the electric motor,
wherein the ends of the stator winding lines are connected, in particular are force-lockingly connected and/or weldingly connected, to cable lugs (5, 11),
wherein the cable lugs (5, 11) are connected to respective bolts (1, 9), in particular wherein the bolts are inserted through an opening arranged in the cable lug,
wherein the cable lugs are arranged cast in casting compound (21) ,
wherein the bolts are each connected, in particular screw-connected, to a spacer (8),
wherein the distance between nearest adjacent bolts, in particular along the spacer and/or thus the distance between the connecting regions of the respective bolt to the spacer, is in each case greater than the radial extent of the spacer,
in particular so that the bolts are arranged in a row on the spacer and are each spaced apart from one another,
wherein the spacer (8) is formed in one piece and/or of electrically insulating material, in particular of plastic, of an epoxy resin-containing part or of ceramic,
wherein the cable lugs are each plugged onto the bolts by means of their punched openings,
wherein a plurality of cable lugs (11) not aligned parallel are connected to a bolt (1) provided for forming a star point,
in particular wherein the cable lugs connected to second ends of the stator windings are connected to the bolt,
wherein the connecting unit is arranged in casting compound (21) in such a manner that the bolt (1) provided for forming a star point does not protrude from the casting compound (21) and that the other bolts (9) at least partly protrude from the casting compound.

2. Electric motor according to claim 1,
**characterised in that**
the spacer is of substantially linear and/or elongated design.

3. Electric motor according to at least one of the preceding claims,
**characterised in that**
a plurality of parallel-aligned cable lugs are connected to one or more bolts,
in particular wherein a distance sleeve, in particular a metallically formed distance sleeve, is arranged on the bolt between the cable lugs,
in particular wherein the cable lugs connected to first ends of the stator windings are connected to the bolt or to the bolts.

4. Electric motor according to at least one of the preceding claims,
**characterised in that**
the bolt provided for forming a star point is axially less extended than the other bolts, in particular in the bolt axial direction and/or in the rotor axial direction of the electric motor.

5. Electric motor according to at least one of the preceding claims,
**characterised in that**
the cable lugs are fastened to the spacer and/or to the distance sleeve by means of nuts screwed onto threaded regions of the bolts.

6. Electric motor according to at least one of the preceding claims,
**characterised in that** the parallel-aligned cable lugs fastened to a respective bolt and the ends of the stator winding lines leading into them are directed tangentially to the circumferential direction.

7. Electric motor according to at least one of the preceding claims,
**characterised in that**
the cable lugs, the bolts and the distance sleeve are produced from electrically conductive material, in particular from metallic material.

8. Electric motor according to at least one of the preceding claims,
**characterised in that**
electrical lines for supplying the electric motor are electrically connected to the end regions of the bolts protruding from the casting compound,
in particular wherein the lines are provided with cable lugs which are fastened to the bolts by means of nuts.

9. Electric motor according to at least one of the preceding claims,
**characterised in that**
the connecting unit is arranged in the axial region of a winding head, in particular therefore deflecting region, of a stator winding,
in particular between rotor and winding head within the casting compound which also surrounds the stator windings.

10. Electric motor according to at least one of the preceding claims,
**characterised in that**
the nuts have a bevelled region for applying a seal during moulding of casting compound,
in particular wherein the bevelled region is not cast with casting compound,
in particular wherein the nuts are designed as open cap nuts.

## Revendications

1. Moteur électrique équipé d'une unité de raccordement en vue de la mise en circuit des enroulements statoriques (U, V, W) dudit moteur électrique,
les extrémités des conducteurs desdits enroulements statoriques étant connectées à des cosses de câblage (5, 11), notamment par engagement positif et/ou par jonction soudée, les cosses de câblage (5, 11) étant reliées à des boulons (1, 9) respectifs, sachant notamment que lesdits boulons sont emboîtés à travers un évidement pratiqué dans la cosse de câblage,
lesdites cosses de câblage étant noyées dans de la masse de scellement (21),
lesdits boulons étant reliés, notamment par vissage, à un élément d'espacement (8) respectif,
la distance séparant des boulons voisins les plus rapprochés, en particulier le long de l'élément d'espacement, et/ou, par conséquent, la distance séparant les zones de liaison du boulon considéré avec ledit élément d'espacement, étant respectivement supérieure(s) à l'étendue radiale dudit élément d'espacement,
en particulier de façon telle que lesdits boulons soient agencés en une rangée sur ledit élément d'espacement, et soient respectivement distants les uns des autres,
ledit élément d'espacement (8) étant réalisé d'un seul tenant et/ou en un matériau électriquement isolant, notamment en matière plastique, en une pièce munie de résine époxy, ou en céramique,
les cosses de câblage étant respectivement emboîtées, sur les boulons, au moyen de l'un de leurs évidements ménagés par poinçonnage,
sachant que plusieurs cosses de câblage (11), non orientées parallèlement, sont reliées à un boulon (1) prévu pour former un point neutre,
sachant notamment que les cosses de câblage, connectées à des secondes extrémités des enroulements statoriques, sont reliées audit boulon,
ladite unité de raccordement étant disposée dans de la masse de scellement (21) d'une manière telle que ledit boulon (1), prévu pour former un point neutre, ne dépasse pas au-delà de la masse de scellement (21) et que les autres boulons (9) soient, au moins partiellement, en saillie au-delà de ladite masse de scellement.

2. Moteur électrique selon la revendication 1,
**caractérisé par le fait que**
l'élément d'espacement offre, pour l'essentiel, une réalisation linéaire et/ou longiforme.

3. Moteur électrique selon au moins l'une des revendications précédentes,
**caractérisé par le fait que**
plusieurs cosses de câblage, orientées parallèlement, sont reliées à un ou plusieurs boulon(s),
sachant notamment qu'une douille d'espacement, en particulier une douille d'espacement de réalisation métallique, est implantée sur le boulon entre lesdites cosses de câblage, sachant notamment que les cosses de câblage, connectées à des premières extrémités des enroulements statoriques, sont reliées audit ou auxdits boulon(s).

4. Moteur électrique selon au moins l'une des revendications précédentes,
**caractérisé par le fait que**
le boulon, prévu pour former un point neutre, présente une étendue moindre que celle des autres boulons dans le sens axial, en particulier dans la direction axiale des boulons et/ou dans la direction axiale du rotor dudit moteur électrique.

5. Moteur électrique selon au moins l'une des revendications précédentes,
**caractérisé par le fait que**
les cosses de câblage sont fixées à l'élément d'espacement, et/ou à la douille d'espacement, au moyen d'écrous vissés sur des régions filetées des boulons.

6. Moteur électrique selon au moins l'une des revendications précédentes,
**caractérisé par le fait que**
les cosses de câblage orientées parallèlement et fixées à un boulon considéré, et les extrémités des conducteurs des enroulements statoriques qui pénètrent dans lesdites cosses, pointent tangentiellement par rapport à la direction périphérique.

7. Moteur électrique selon au moins l'une des revendications précédentes,
**caractérisé par le fait que**
les cosses de câblage, les boulons et la douille d'espacement sont fabriqués en un matériau électriquement conducteur, notamment en un matériau métallique.

8. Moteur électrique selon au moins l'une des revendications précédentes,
**caractérisé par le fait que**
des conducteurs électriques, dévolus à l'alimentation dudit moteur électrique, sont connectés électriquement aux régions extrêmes des boulons qui font saillie au-delà de la masse de scellement,
sachant notamment que lesdits conducteurs sont pourvus de cosses de câblage fixées sur lesdits boulons au moyen d'écrous.

9. Moteur électrique selon au moins l'une des revendications précédentes,
**caractérisé par le fait que**
l'unité de raccordement est disposée dans la région axiale d'une tête d'enroulement, c'est-à-dire, en particulier, d'une zone de déviation d'un enroulement statorique,
en particulier entre le rotor et ladite tête d'enroulement, à l'intérieur de la masse de scellement qui entoure également les enroulements statoriques.

10. Moteur électrique selon au moins l'une des revendications précédentes,
**caractérisé par le fait que**
les écrous comportent une région biseautée dédiée à la mise en applique d'une garniture d'étanchement, lors du déversement d'une masse de scellement dans un moule,
sachant notamment que ladite région biseautée n'est pas noyée dans de la masse de scellement,
sachant notamment que lesdits écrous sont réalisés en tant que capuchons taraudés de type ouvert.
